Europäisches Patentamt

European Patent Office

Office européen des brevets

(19)

(11) Publication number: **0 305 579 B1**

# EUROPEAN PATENT SPECIFICATION

(12)

(45) Date of publication of patent specification: **27.03.91**   (51) Int. Cl.⁵: **B60J 11/00**

(21) Application number: **87112943.3**

(22) Date of filing: **04.09.87**

(54) **A car cover assembly.**

(43) Date of publication of application:
**08.03.89 Bulletin 89/10**

(45) Publication of the grant of the patent:
**27.03.91 Bulletin 91/13**

(84) Designated Contracting States:
**AT BE CH DE ES FR GB GR IT LI LU NL SE**

(56) References cited:
**DE-U- 8 618 733**

(73) Proprietor: **Su, Yung-Fr**
**No. 28, Lane 9 Ming Yu Road**
**Kang San Chen Kaohsiung Hsien(TW)**

(72) Inventor: **Su, Yung-Fr**
**No. 28, Lane 9 Ming Yu Road**
**Kang San Chen Kaohsiung Hsien(TW)**

(74) Representative: **Dickel, Klaus, Dipl.-Ing. et al**
**Julius-Kreis-Strasse 33**
**W-8000 München 60(DE)**

**Description**

The invention relates to a car cover assembly in accordance with the generic part of the main claim.

A car cover assembly of this kind is known by DE-U-8 618 733. This car cover is designed as sunprotection roof. It is Unsuited for protecting against rain and snow fall during winter time. Rain will wet the roof and rolling together a wet canvas will result in stickiness and rotten material. If the roof is covered by snow it cannot be rolled together at all. It may, therefore, be desirable under certain weather conditions to provide a disposable car cover which may be disposed of together with snow deposite thereon.

The main object of this invention is therefore, to provide a car cover assembly which selectively has a packable car cover roll or a disposable car cover roll placed in the spoiler for easy use and space saving.This main object of the invention is achieved by the features referred to in the main claim 1.

Further embodiments or developments in line with the main claim 1 are defined in the dependent claims.

In accordance with one embodiment of the invention there is provided a car cover assembly which, after being unrolled, can be adjusted in three steps according to the direction of the sun so as to enhance its sunshade function.

As a further development of the invention there is provided a car cover assembly of which the disposable car cover roll made in mass production into separatable plastic covers and placed in the spoiler (or folded up into a stack of separatable covers and packed in a box for use without spoiler) is coated with oil and is waterproof and easy to dispose of snow deposit.

In accordance with a further embodiment of the invention there is provided a car cover assembly of which the fastening band type disposable car cover has fastening bands for fastening the cover to the car body and has two different types for easy and economical use depending upon the heaviness of snowfall.

In still another embodiment of the invention there is provided a car cover assembly of which the adhesive tape type disposable car cover has adhesive tapes at the sides for easy adhereing to the car body after being unfolded.

In a further development (see claim 9) there is provided a car cover assembly of which the bag type disposable car cover has seal lines to form a container, pleated expensible parts at both sides, and an oblong opening in the bottom so that the whole car body can be wrapped in the cover.

BRIEF DESCRIPTION OF THE DRAWINGS

Fig. 1 is an exploded view of the spoiler and the packable car cover roll of this invention.

Fig. 1-1 illustrates the cotter pin of the axle support device of the said spoiler.

Fig. 2 is a vertical section of the axle support device of the said spoiler.

Fig. 3 is a cross section of the said support device.

Fig. 4 is an exploded view of the packable car cover winder.

Fig. 5 is a longitudinal section of the said packable car cover winder.

Fig. 6 is an exploded view of the frame of the said packable car cover.

Fig. 7 is a longitudinal section of the joint of the said frame.

Fig. 8 is cross section of the joint as shown in Fig. 7.

Fig. 9 illustrates the folding of the said frame.

Fig. 10 is a top view of the packable car cover fixed with the said frame.

Fig. 11 is a top view of the packable car cover being unfolded and flattened.

Fig. 12 illustrates the application of the said packable car cover and frame.

Fig. 13 is an exploded view of the roll of the disposable car cover.

Fig. 13-1 illustrating the mounting of the spindle of the roll of disposable car cover in the adjustable support device.

Fig. 14 is a top view of the adhesive type disposable car cover of this invention.

Fig. 15 is a top view of the cover as shown in Fig. 14 after being unfolded.

Fig. 16 is a top view of the fastening band type disposable car cover of this invention.

Fig. 17 is a top view of the cover as shown in Fig. 16 after being unfolded.

Fig. 18 is a top view of the second fastening band type disposable car cover of this invention.

Fig. 19 is a top view of the cover as shown in Fig. 18 after being unfolded.

Fig. 20 is a vertical section of the bag type disposable car cover of this invention.

Fig. 21 is a top view of the cover as shown in Fig. 20.

Fig. 22 is a cross section of the cover as shown in Fig. 20.

Fig. 23 illustrates the application of the cover as shown in Fig. 20.

DETAILED DESCRIPTION OF THE PREFERRED EMBODIMENT

Referring now to the drawings, the nature of this invention is described in detail as follows:

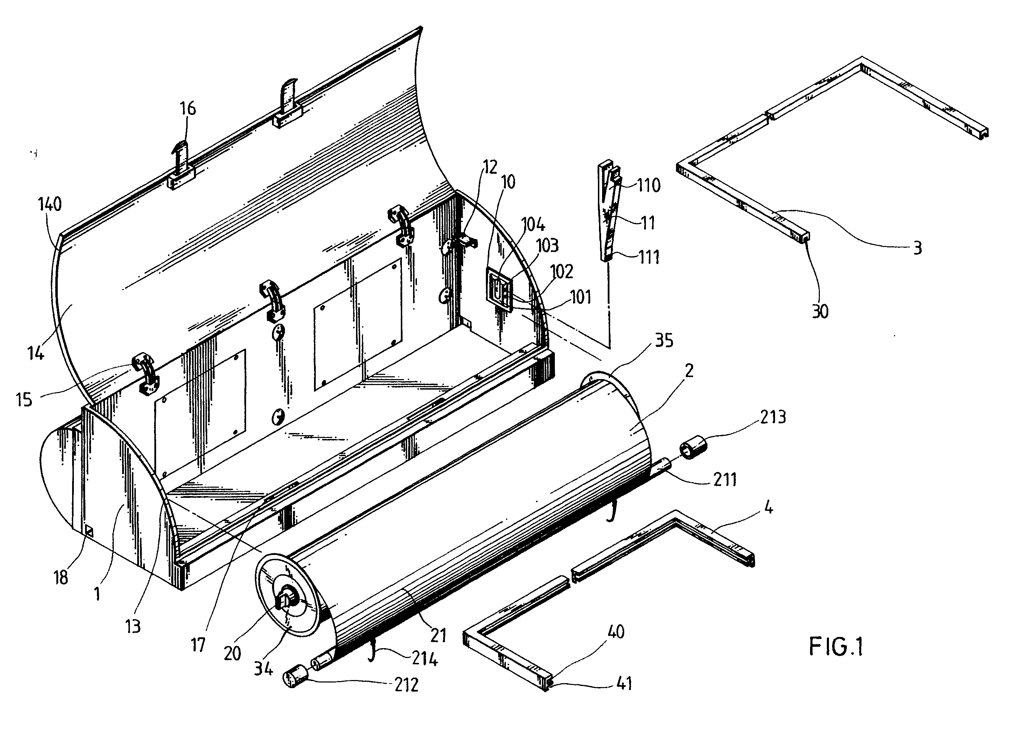

As shown in Figs. 1, 2 and 3, the spoiler 1 has two axle support devices 10, one on each side. The axle support devices 10 are made by punching and each of them has a projection 101. The projection 101 has two lateral cotter holes 102, 103 at both ends and a vertical recess 104 in the middle. In either cotter hole 102 or 1023, a split cotter 11 is fitted. The split cotter 11 consists of a head 111 and a split end 110 which can snap in the cotter hole 102 or 103 after the head 110 is inserted. It can be removed from the hole 102 or 103 by pressing the two parts of the split end together. After the rectangular ends of the winder axle 20 of the packable car cover 2 are fitted in the support devices 10 and locked by the split cotter 11, the axle 20 will not turn. The spoiler 1 also has two supports 12 on the inside near the corner for the lateral rod 211 of the canvas 6 of the packable car cover to rest. The lateral rod 211 has two rubber casings 212, 213 to increase friction with the supports 12 and to prevent it from falling off. The spoiler 1 has rubber packings 3, 4. The rubber packing 3 has a groove 30 for fitting on the edge 13 of the spoiler and the rubber packing 4 has a groove 40 for fitting on the edge 140 of the cover 14. When the cover 14 is closed, the projection 41 of the rubber packing 4 is fitted on the outside of the edge 13 of the spoiler 1 for water proofing and shock absorbing purpose. The spoiler 1 and the lid 14 are joined together with three hinges 15. The lid 14 has two hook retainers 16 to be inserted in the retainer holes 17 in the spoiler 1 and retained therein. The hook retainer 16 is fixed to a slide switch 17 and can be released by laterally pushing the slide switch 17. The spoiler 1 also has two holes 18 for draining away the water in the spoiler 1.

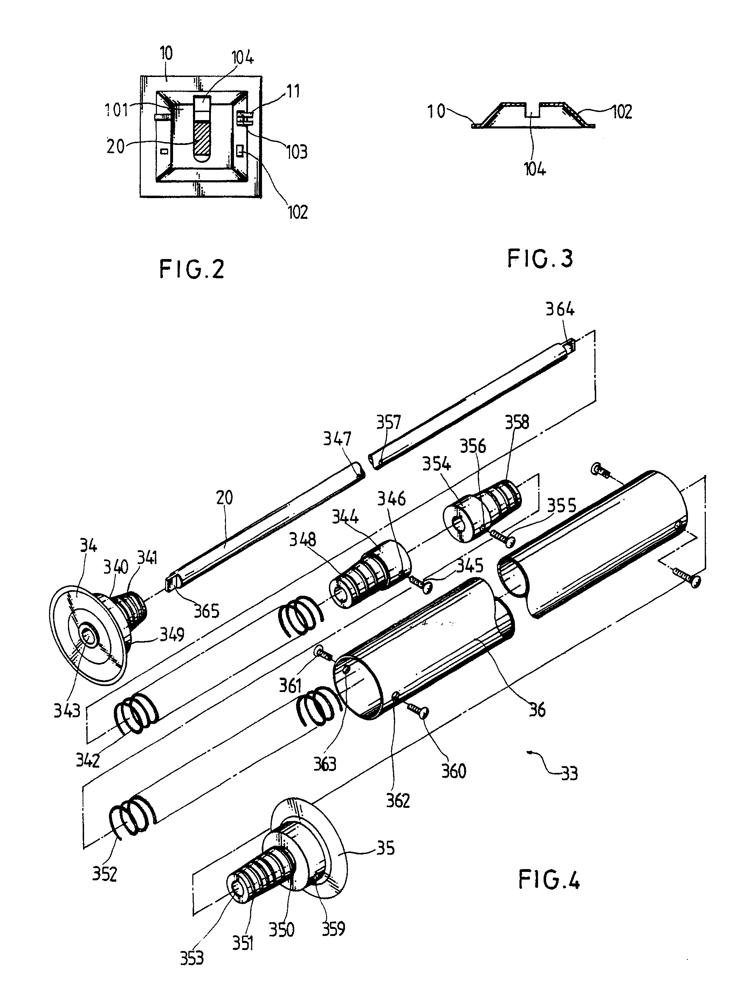

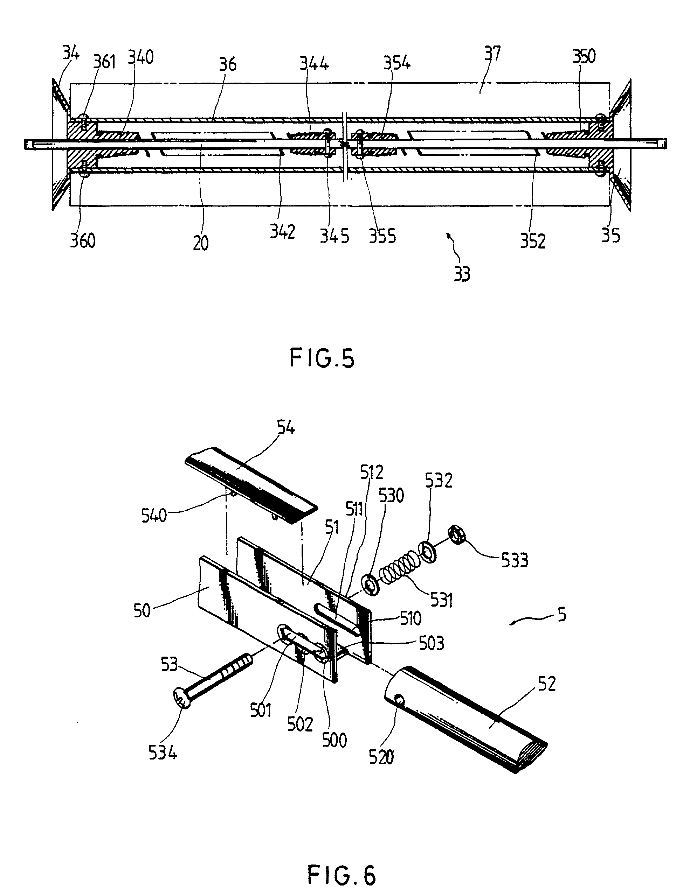

As shown in Figs. 4 and 5, the winder 33 of the packable car cover 2 consists of a spindle 36, two heads 34, 35, two springs 342, 352, one axle 20 and two cones 344, 354. The heads 34, 35 have stubs 340, 350 with spiral grooves 341, 351 for the springs 342, 352 to fit on, axle holes 343, 353 for the flat-ended axle 20 to fit in, and screw holes 349, 359 for fixing themselves to the spindle 36 by means of screws 360, 361. The cones 344, 354 have spiral grooves 348, 358 for the other ends of the springs 342, 352 to fit on, screw holes 346, 356 for fixing themselves to the axle 20 by means of screws 345, 355, and axle holes for the axle 20 to fit in. The spindle 36 has screw holes 362 for the screws 360, 361 to fix the heads 34, 35. To assemble, one of the two heads 34, 35 may be fixed at last. Guided by the heads 34, 35 of the winder 33, the combination 37 of canvas 6 and frame 5 is wound on the spindle 36 and the lateral rod 211 at the front end is placed on the supports 12. Since the flat ends 364, 365 of the axle 20 are fixed in the vertical recesses 104 of the support devices 10 as shown in Fig. 2, the axle 20 will not turn with the unwinding of the combination 37 as it is pulled. Since the spindle 36 is fixed to the heads 34, 35, the springs 342, 352 will be forced out of shape when the spindle turns with the unwinding of the canvas 6. The springs 342, 352 will return to their original form when the spindle 36 turns with the winding of the canvas 6 as it is released.

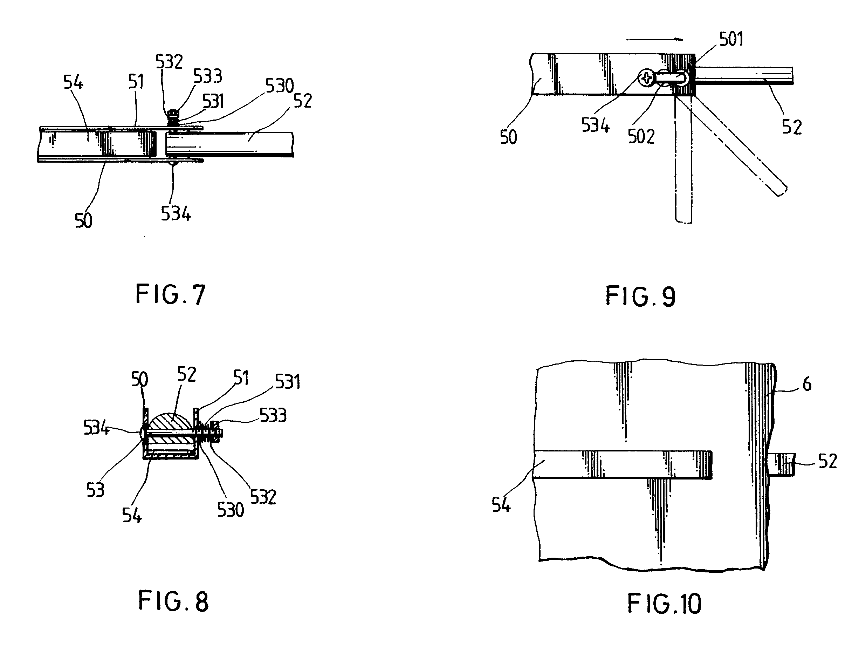

As shown in Figs. 6, 7, 8, 9 and 10, the folding frame 5 consists of two side plates 50, 51, a bottom plate 503, a retaining plate 54, and two extension rods 52. The side plates 50, 51 have adjusting holes 500, 510, lateral slots 501, 511, and snap sinks 502, 512 around the adjusting holes 500, 510. The extension rods 52 has a bolt hold 520 at the end for a bolt 53 to fit in. After passing the adjusting hole 500, bolt hole 520, another adjusting hole 510, a washer 530, a spring 531 and another washer 532, the bolt 53 is screwed on by a nut 533 to hold the parts together. The bottom plate 503 has packing holes (not shown) and the retaining plate 54 has studs 540 so that the canvas 6 can be held firmly by the bottom plate 503 and retaining plate 54 after the studs 540 are inserted in the packing holes as shown in Fig. 10. The connection of the extension rod 52 and the canvas 6 is achieved by inserting the extension rod 52 in the receptacles made in the canvas 6. As shown in Fig. 9, the joint of the side plates 50, 51 and the extension rod 52 is a three-step joint. When the extension rod 52 is pulled away, the head 534 of the bolt 53 will move from one sink 421 to another and the rod 52 can be folded.

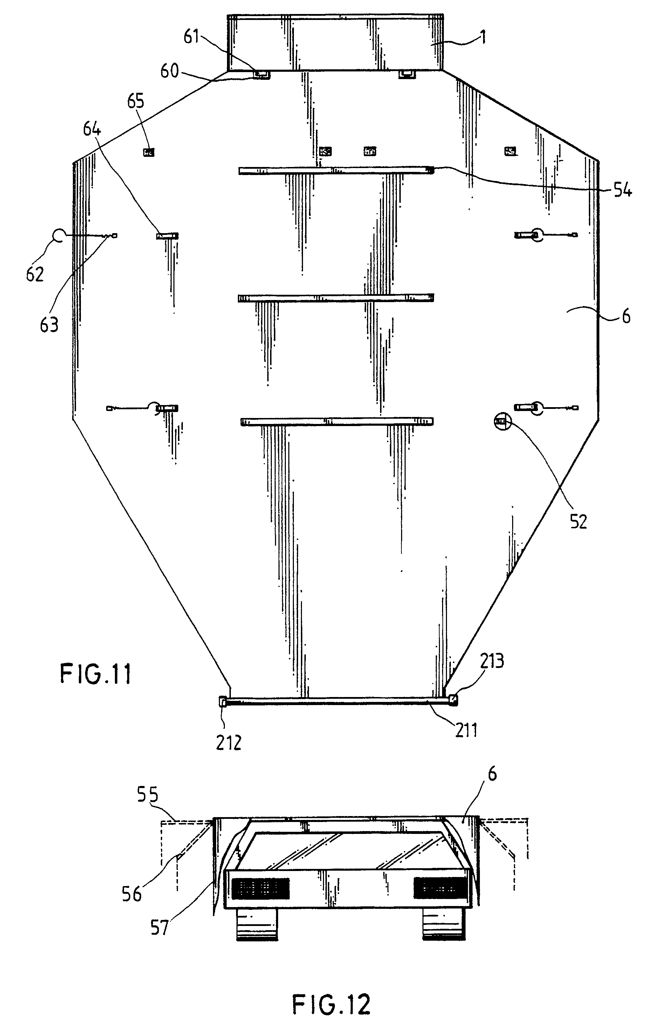

As shown in Fig. 11, the canvas 6 has hook holes 60 (also as shown in Fig. 1) for the fastening hooks 16 of the spoiler 1 to insert to prevent the canvas 6 from being punctured by the hooks 16 and to prevent the user from being injured by the canvas 6 when it is rewound suddenly by the winder 33 (as shown in Fig. 4) after the hooks 214 at the lateral rod 211 slip off the car bottom edge. Reinforcements 61 are provided around the hook holes 60 as protection against fracture. The canvas 6 has hooks 62 at both sides for fastening the canvas 6 to the bottom edge of the car body to prevent the canvas 6 from being blown off by the wind. The hooks 62 are fastened to the canvas 6 by elastic bands 63 and can be attached to the strips 64 when not in use. The strips 64 are attached to the canvas 6 by sewing at both ends. In addition, adhesive tapes 65 are provided at the rear end of the canvas 6 to hold the side folds in place.

As shown in Figs. 12 and 9, the extension rod 52 of the frame 5 can be adjusted in three steps. In the first step, the rod 52 is in a horizontal position 55 and, with greatest sunshade area, is suitable for use in a large place. In the second step, the rod 52 is in an inclined position 56 and is suitable for use in a smaller place. In the third step the rod 52 is in a vertical position 57 and is suitable for use in a further smaller place. In addition, the frame 5 can be adjusted according to the direction of the sun. From the above it is clear that the packable car cover 2 consists of a winder, canvas and frame and can be adjusted in three steps, and used for protection against the sun's rays and dust.

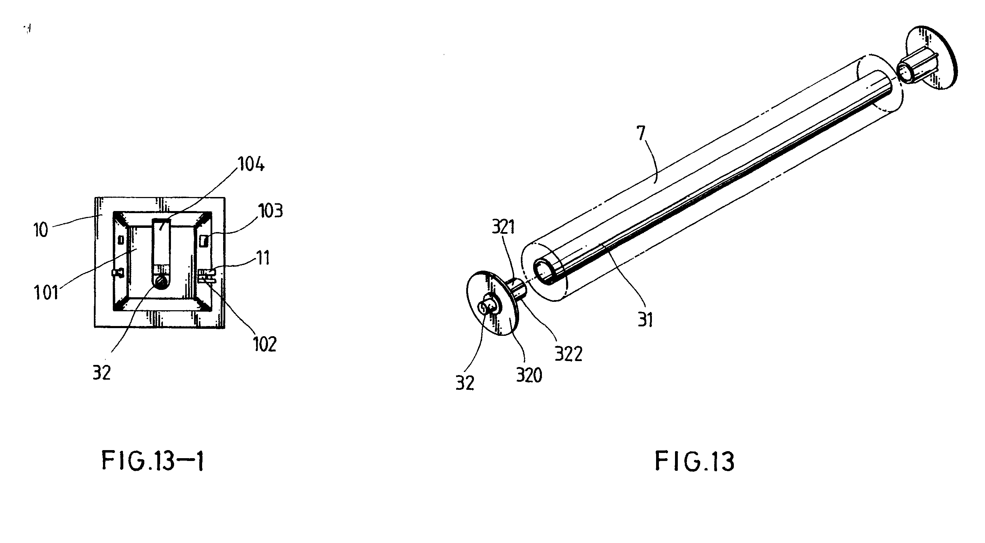

As shown in Figs. 13 and 13-1, the reel of the roll of the disposable car cover 7 consists of a spindle 31 and two heads 320. Each of the heads 320 has a stub axle 32 and a stud 321. The stud 321 has ribs 322 to be held by the spindle 31. The round stub axle 32 is mounted in the vertical recess 104 of the support device 10 and retained by the cotter 11 and can turn with the unrolling of the roll of disposable car cover 7. So the roll of disposable car cover is suitable for use to protect against the rain and snow. The roll of disposable car cover 7 has three different types as follows:

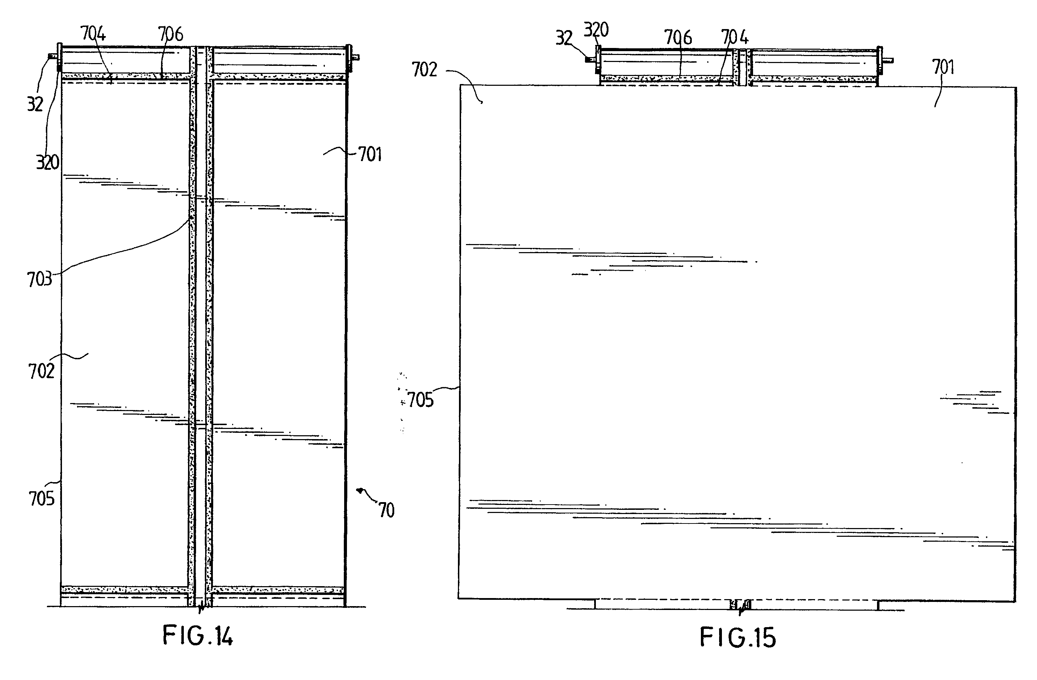

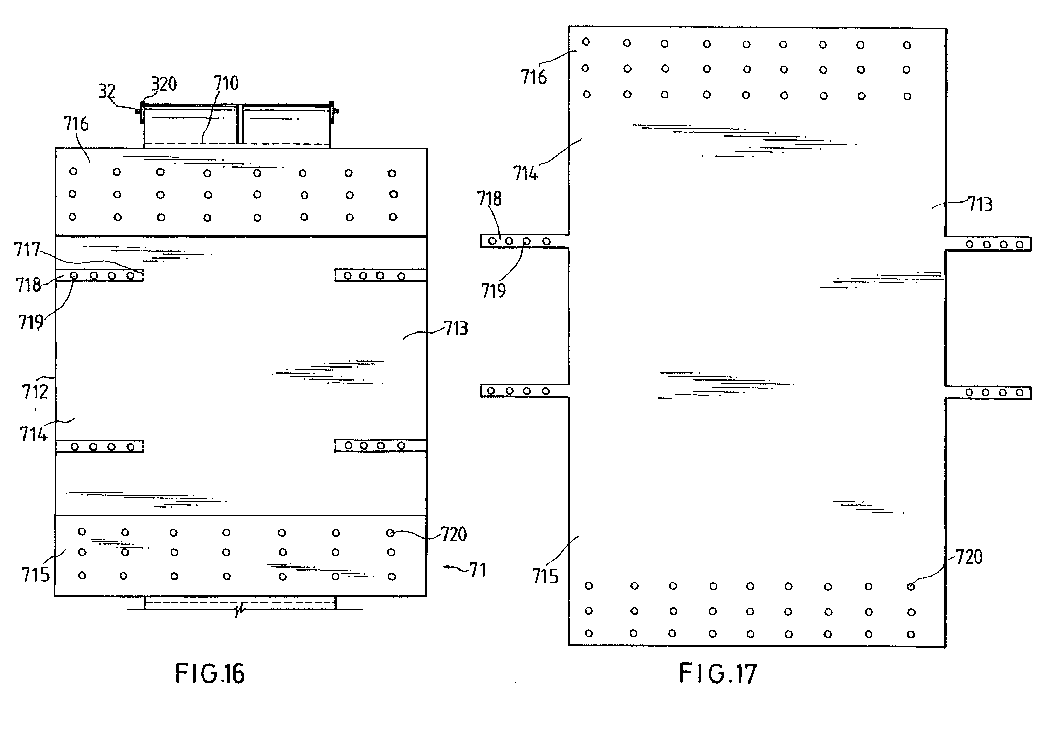

The adhesive type car cover roll 70 as shown in Figs. 14 and 15 has its left and right parts 702, 701 doubled up on itself and has adhesive strips 703 at the edge of each fold. The roll 70 also has rows of perforations 704 to facilitate tearing into separate covers 705. An adhesive strip 706 is also provided just before the separations 704 in order that the left and right parts 702, 701 can adhere to the bottom edge of the car head after being unfolded. Before tearing, the lid 14 of the spoil 1 can be closed so that the hook retainers 16 can insert in the separations 704 to facilitate separating and disposing after use.

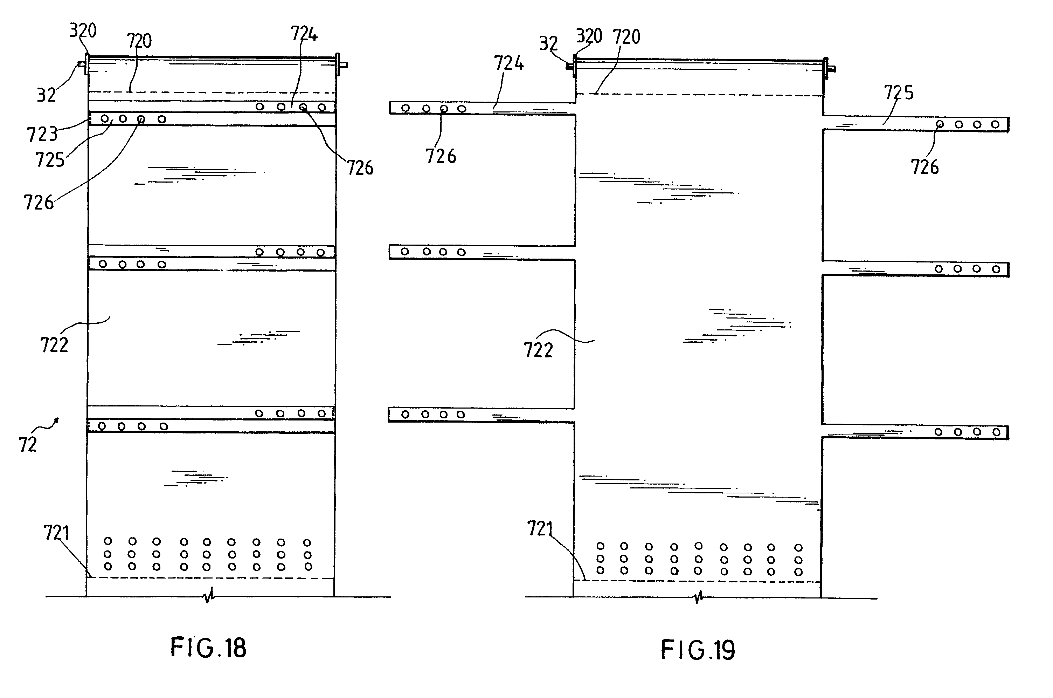

Figs. 16 and 17 show the first fastening band type car cover roll 71 which is used in the snowy day. This roll 71 has separations 710, 711 to facilitate tearing into separate covers 712. The cover 712 is folded up from the unfoldable side parts 713, 714. The side parts 713, 714 can cover the car sides after being unfolded. The cover 712 also have unfolded front and rear parts 715, 716 to cover the front and rear ends of the car body after being unfolded. The side parts 713, 714 have separations 717 to facilitate the separating of the end of the fastening band. The front and rear parts 715, 716 and the fastening bands 718 have fastening holes 719 for fastening the cover 712 to the hooks attached to the car bottom to prevent the cover 712 from being blown away by the wind.

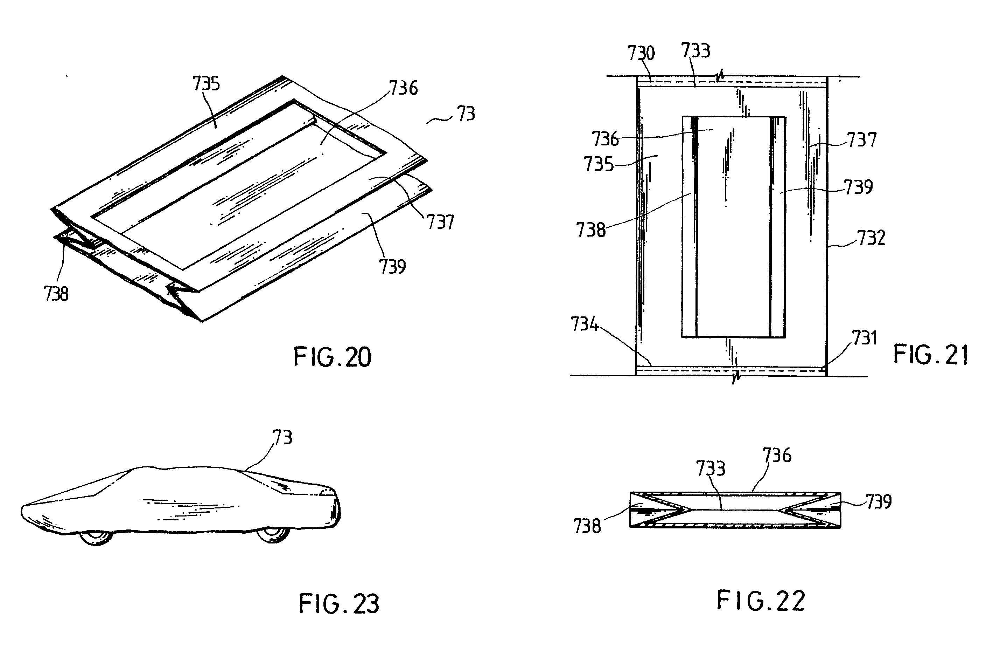

Figs. 18 and 19 show the second band type car cover roll 72 which is used in the slightly snowy day. It also has separations 720, 721 to facilitate tearing into separate covers 722. The cover 722 is made in contingent on the length of the car body and has unfoldable fastening bands 724, 725 and fastening holes 726 in the front part and fastening bands for attaching the cover 722 to the car bottom hooks after being unfolded.

Figs. 20, 21, 22 and 23 show the bag type car cover roll 73 which is used in the snowy and rainy day. The roll 73 has separations 730, 731 to facilitate tearing into separate covers 732, and seal lines 733, 734 to form a container after being separated. The cover 732 has a pleated expansible parts 738, 739 at both sides and an oblong opening 736 in the bottom part 735 so that the whole car body can be wrapped in the cover 732 as shown in Fig. 23 without fear of being blown away by the wind.

## Claims

1. A car cover assembly comprising a spoiler (1) mounted on the rear of a car and having a hinged lid (14) at the top and two supports and axle support devices (10) on both sides to support a roll of car cover (6, 7, 21), **characterized by** said axle support devices (10) optionally housing a roll of packable car cover (6, 21) or a roll of disposable car cover (7, 70, 71), wherein each of the axle support devices (10) in the spoiler has a projection (101) with two cotter holes (102, 103) at the ends and a vertical recess (104) in the middle so that after the axle of the roll of disposable cover or packable cover is put in the recess (104), it can be kept by a cotter (11) from slipping off.

2. A car cover assembly according to claim 1, wherein the winder (33) of the packable car cover (2) consists of two heads (34, 35) having threaded stubs and axle holes, a spindle (36), two springs (342, 352), a flat-ended axle (20) and two threaded cones (344, 354), and is constructed in such way that after it is mounted on the support devices, it can rewind the canvas automatically when the unwound canvas is released.

3. A car cover assembly according to claims 1 and 2 wherein the folding canvas frame (5) consists of two side plates (50, 51) and an extension rod (52) held together by means of a bolt (53) and nut (533); said side plates (50, 51) having adjusting holes (500, 510), lateral slots (501, 511) and snap sinks (502, 512) around the adjusting holes (500, 510) and said extension rods (52) inserting in the receptacle of the canvas and holding the canvas with a retaining plate so that the bolt can slide in the slots and the extension rods can be adjusted and folded in three steps.

4. A car cover assembly according to claims 1 to 3 wherein the canvas (6) of the packable car cover has adhesive tapes (65) at the rear end, hook holes (60) for the fastening hooks of the spoiler to insert, and hooks (62) attached to both sides with elastic bands (63) for fastening the canvas (6) to the bottom edge of the car body, which can be attached to the strips (64) when not in use.

5. A car cover assembly according to claim 1 wherein the reel of the roll of disposable car cover (7) consists of a spindle (31) and two heads (320) having studs (321) with ribs (322) to be held by the spindle (31) and stub axles (32) to be supported on the axle support devices (10) in the spoiler for turning to unroll the disposable car cover.

6. A car cover assembly according to claims 1 and 5 wherein th adhesive type roll of disposable car cover has left and right parts (701, 702) double up on itself, separations (704) to facilitate tearing into separate covers, and adhesive strips (706) both at the edge of each fold and at the place just before the separations (704) for adhering to the car body after being unfolded.

7. A car cover assembly according to claims 1 and 5 wherein the first fastening band type car cover roll (71) has separations (710, 711) to facilitate tearing into separate covers (712) each of which has unfoldable side folds (713, 714), fastening bands (718) at both sides, fastening holes (719) both in the fastening bands and in the front and rear parts for fastening the cover (712) to the car body, and perforations (717) at one end of each fastening band to facilitate tearing.

8. A car cover assembly according to claims 1 and 5 wherein the second fastening band type car cover roll (72) has separations (720, 721) to facilitate tearing into separate covers (722) each of which has perforations at one end of each unfoldable fastening bands (724, 725) to facilitate tearing, and fastening holes (726) both in the unfoldable bands and in the front part.

9. A car cover assembly according to claims 1 and 5 wherein the bag type car cover roll (73) has separations (730, 731) to facilitate tearing into separate covers (732) each of which has seal lines (733, 734) to form a container, pleated expansible parts (738) at both sides and an oblong opening (736) in the bottom (735) so that the whole car body can be wrapped in the cover (732).

## Revendications

1. Agencement de housse de protection de véhicule comprenant un déflecteur (1) monté sur l'arrière du véhicule et comportant sur le dessus un couvercle (14) à charnière et sur chaque côté un dispositif (10) de support d'axe pour supporter un rouleau de housse de protection (6, 7, 21) de véhicule, caractérisé par le fait que ledit déflecteur (1) loge facultativement un rouleau de housse de protection empaquetable (6, 21) de véhicule et un rouleau de housse de protection jetable (7, 70, 71) de véhicule, chacun des dispositifs (10) de support d'axe du déflecteur comportant une saillie (101) pourvue de deux trous (102, 103) de clavette à ses extrémités et d'un évidement vertical (104) à sa partie médiane de manière qu'après que l'axe du rouleau de housse de protection jetable ou de housse de protection empaquetable ait été introduit dans l'évidement (104), il peut être empêché de s'échapper par une clavette (11).

2. Agencement de housse de protection de véhicule selon la revendication 1, dans lequel l'enrouleur (33) de la housse de protection empaquetable (2) consiste en deux têtes (34, 35) comportant des ergots filetés et des trous pour axe, une broche (36), deux ressorts (342, 352), un axe (20) à extrémités plates et deux cônes filetés (344, 354) et est réalisé de manière telle qu'après avoir été monté sur les dispositifs de support, il puisse réenrouler la toile automatiquement quand la toile déroulée est libérée.

3. Agencement de housse de protection de véhicule selon les revendications 1 et 2, dans lequel le bâti pliant (5) de la toile consiste en deux plaques latérales (50, 51) et en une barre d'extension (52) maintenues assemblées au moyen d'une vis (53) et d'un écrou (533) ; lesdites plaques latérales (50, 51) comportant des trous de réglage (500, 510), des fentes latérales (501, 511) et des évidements d'encliquetage (502, 512) autour des trous de réglage (500, 510) et lesdites barres d'extension (52) étant insérées dans le réceptacle de la toile et maintenant la toile à l'aide d'une plaque de retenue de manière que la vis puisse glisser dans les fentes et que les barres d'extension puissent être ajustées et pliées en trois étapes.

4. Agencement de housse de protection de véhicule selon les revendications 1 à 3, dans lequel la toile (6) de la housse de protection empaquetable comporte des rubans adhésifs (65) à son extrémité arrière, des trous d'accrochage (60) pour l'introduction des crochets de fixation du déflecteur, et des crochets (62) fixés aux deux côtés à l'aide de bandes élastiques (63) pour fixer la toile (6) au bord inférieur de la carrosserie du véhicule, ces crochets pouvant être fixés à des bandes (64) quand ils ne sont pas utilisés.

5. Agencement de housse de protection de véhicule selon la revendication 1, dans lequel la bobine du rouleau de housse de protection jetable (7) consiste en une broche (31) et deux têtes (320) comportant des tourillons (321) avec des nervures (322) pour être supportées par la broche (31) et des bouts d'axe (32) pour être supportées par les dispositifs (10) de support d'axe du déflecteur afin de tourner pour dérouler la housse de protection jetable.

6. Agencement de housse de protection de véhicule selon les revendications 1 et 5, dans lequel le rouleau, du type adhésif, de housse de protection jetable comporte des parties gauche et droite (701, 702) repliées sur elles-mêmes, des séparations (704) pour faciliter le déchirement en housses de protection séparées, et des bandes adhésives (706) à la fois au bord de chaque pli et à l'endroit situé juste devant les séparations (704) pour adhérer à la carrosserie après avoir été dépliées.

7. Agencement de housse de protection de véhicule selon les revendications 1 et 5, dans lequel le premier rouleau (71) de housse de protection du type à bandes de fixation comporte des séparations (710, 711) pour faciliter le déchirement en housses de protection séparées (712) dont chacune comporte des plis latéraux dépliables (713, 714), des bandes de fixation (718) à ses deux côtés, des trous de fixation (719) à la fois dans les bandes de fixation et dans les parties avant et arrière pour une fixation de la housse de protection (712) à la carrosserie, et des perforations (717) à une des extrémités de chaque bande de fixation pour faciliter le déchirement.

8. Agencement de housse de protection de véhicule selon les revendications 1 et 5, dans lequel le rouleau (72) de housse de protection du type à bandes de fixation comporte des séparations (720, 721) pour faciliter le déchirement en housses de protection séparées (722) dont chacune comporte des perforations à une des extrémités de chacune des bandes de fixation dépliables (724, 725) pour faciliter le déchirement, et des trous de fixation (726) à la fois dans les bandes dépliables et dans la partie avant.

9. Agencement de housse de protection de véhicule selon les revendications 1 et 5, dans lequel le rouleau (73) de housse de protection de véhicule, du type sac, comporte des séparations (730, 731) pour faciliter le déchirement en housses de protection séparées (732) dont chacune comporte des lignes de fermeture étanches (733, 734) de manière à former un récipient, des parties expansibles plissées (738) sur ses deux côtés et une ouverture oblongue (736) dans son côté inférieur (735) de manière que la totalité de la carrosserie puisse être enveloppée dans la housse de protection (735).

## Ansprüche

1. Abdeckeinrichtung für Fahrzeuge mit einem Spoiler (1), der hinten am Fahrzeug befestigt ist und oben eine mit Scharnieren versehene Klappe (14) sowie auf beiden Seiten zwei Stützen und Achsabstützeinrichtungen (10) zur Unterstützung einer Fahrzeugabdeckrolle (6, 7, 21) trägt, dadurch gekennzeichnet, daß die Achsabstützeinrichtungen (10) wahlweise eine Rolle einer verpackbaren Fahrzeugabdeckung (6, 21) oder eine Rolle einer EinwegFahrzeugabdeckung (7, 70, 71) aufnehmen, wobei jede der Achsabstützeinrichtungen (10) innerhalb des Spoilers einen Vorsprung (101) mit zwei Splintlöchern (102, 103) am Ende trägt, sowie eine vertikale Ausnehmung (104) in der Mitte, so daß dann, wenn sich die Achse der Rolle der Einweg-Fahrzeugabdeckung oder der verpackbaren Fahrzeugabdeckung in der Ausnehmung (104) befindet, ein Ausgleiten durch einen Splint (11) verhindert werden kann.

2. Abdeckeinrichtung nach Anspruch 1, dadurch gekennzeichnet, daß eine Aufwickeleinrichtung (33) für die verpackbare Fahrzeugabdeckung (2) vorgesehen ist, die zwei Endstücke (34, 35) mit Gewinde und Axialausnehmung, eine Spindel (36), zwei Federn (342, 352), eine Achse (20) mit abgeflachtem Ende und zwei Gewindekonen (344, 354) umfaßt, und derart aufgebaut ist, daß nach der Montage in den Abstützeinrichtungen ein selbsttätiges Aufwickeln der Fahrzeugabdeckung ermöglicht wird, nachdem die abgewickelte Fahrzeugabdeckung freigegeben wird.

3. Abdeckeinrichtung nach einem der Ansprüche 1 oder 2, dadurch gekennzeichnet, daß ein Faltrahmen (5) für die Fahrzeugabdeckung vorgesehen ist, der aus zwei Seitenplatten (50, 51) und einem Verlägnerungsstab (52) besteht, die mittels einer Schraube (53) und einer Mutter (533) zusammengehalten sind, wobei die Seitenplatten (50, 51) Anpassungslöcher (500, 510), Querschlitze (501, 511) und Einrastausnehmungen (502, 512) um die Anpassungslöcher (500, 510) herum aufweisen, und die Verlängerungsstäbe (52) derart in den Aufnahmebereich der Fahrzeugabdeckung eingeführt sind und die Fahrzeugabdeckung derart von einer Halteplatte getragen ist, daß die Schraube in den Schlitzen zu gleiten vermag und die Verlängerungsstäbe in drei Stufen eingestellt und gefaltet werden können.

4. Abdeckeinrichtung nach einem der Ansprüche 1 bis 3, dadurch gekennzeichnet, daß die Leinwand (6) der verpackbaren Fahrzeugabdeckung am rückwärtigen Ende mit Klebestreifen (65), Hakenlöchern (60) für den Eingriff der Befestigungshaken des Spoilers und Haken (62) versehen ist, die auf beiden Seiten mit elastischen Bändern (63) befestigt sind, zur Halterung der Leinwand (6) an der Bodenkante des Fahrzeugs, die mit den Streifen (64) in unbenutztem Zustand zum Eingriff bringbar sind.

5. Abdeckeinrichtung nach Anspruch 1, dadurch gekennzeichnet, daß die Spule der Rolle der Einweg-Fahrzeugabdeckung (7) aus einer Spindel (31) und zwei Endstücken (320), mit Rippen (322) tragenden Achsstümpfen (321), die von der Spindel (31) gehalten sind, besteht, wobei Achsstümpfe (32) von Achsabstützeinrichtungen (10) innerhalb des Spoilers drehbar getragen sind, zum Entrollen der Einweg-Fahrzeugabdeckung.

6. Abdeckeinrichtung nach einem der Ansprüche 1 und 5, dadurch gekennzeichnet, daß die Einweg-Fahrzeugabdeckung vom Kleberollen-Typ links und rechts Teile (701, 702) aufweist, die auf sich selbst zurückgeschlagen sind, während Trennlinien (704) vorgesehen sind zum Abreißen einzelner Abdeckungen, und Klebestreifen (706) an beiden Außenkanten der Einfaltungen und unmittelbar vor den Trennlinien (704) vorgesehen sind, zur Befestigung an dem Fahrzeug nach dem Entfalten.

7. Abdeckeinrichtung nach einem der Ansprüche 1 und 5, dadurch gekennzeichnet, daß die Fahrzeugabdeckung (71) vom ersten Befestigungsband-Typ Trennlinien (710, 711) zur Erleichterung des Abreißens in einzelne Abdeckungen (712) aufweist, von denen jede entfaltbare Seiteneinfaltungen (713, 714), Befestigungsbänder (718) auf beiden Seiten, Befestigungslöcher (719) sowohl im vorderen als auch im rückwärtigen Bereich besitzt, zur Befestigung der Abdeckung (712) am Fahrzeugkörper, sowie Perforationen (717) an einem Ende eines jeden Befestigungsbandes, zur Erleichterung des Abreißens.

8. Abdeckeinrichtung nach einem der Ansprüche 1 und 5, dadurch gekennzeichnet, daß die Fahrzeugabdeckung (72) vom zweiten Befestigungsband-Typ Trennlinien (720, 721) zur Erleichterung des Abreißens in einzelne Abdeckungen (722) aufweist, von denen jede Perforationen an einem Ende eines jeden entfaltbaren Befestigungsbandes (724, 725) trägt, zur Erleichterung des Abreißens, sowie Befestigungslöcher (726) sowohl in den entfaltbaren Bändern als auch in dem vorderen Teil.

9. Abdeckeinrichtung nach einem der Ansprüche 1 und 5, dadurch gekennzeichnet, daß die Fahrzeugabdeckrolle (73) vom Beutel-Typ Trennlinien (730, 731) zur Erleichterung des Abreißens in einzelne Abdeckungen (732) aufweist, von denen jede Schweißlinien (733, 734) zur Bildung eines Behälters trägt, während auf beiden Seiten zusammengelegte, auffaltbare Teile (738) vorgesehen sind, sowie eine längliche Öffnung (736) im Boden (735), so daß der gesamte Fahrzeugkörper von der Abdeckung (732) umhüllbar ist.

FIG.1

EP 0 305 579 B1

FIG.2

FIG.3

FIG.4

FIG.5

FIG.6

FIG.7

FIG.9

FIG.8

FIG.10

EP 0 305 579 B1

FIG.11

FIG.12

FIG.13

FIG.13—1

FIG.14

FIG.15

14

EP 0 305 579 B1

FIG.16

FIG.17

FIG.18

FIG.19

EP 0 305 579 B1

FIG.20

FIG.21

FIG.23

FIG.22

EP 0 305 579 B1